# EUROPÄISCHE PATENTSCHRIFT

(11) **EP 1 676 732 B1**
(45) Veröffentlichungstag und Bekanntmachung des Hinweises auf die Patenterteilung: **30.04.2008**
(21) Anmeldenummer: 05028018.9
(22) Anmeldetag: 21.12.2005
(51) Int. Cl.: B60G 9/02, B60G 7/02, F16F 1/38

(54) **Achslenkerlager eines Kraftfahrzeugs mit einem Elastomer-Metall-Gelenklager**
Pivot bearing of an axle guide of a vehicle with a metal-elastomer-bushing
Palier pour guide d'essieu d'un véhicule avec un joint articulé en métal et élastomer

(30) Priorität: 04.01.2005 DE 102005000760
(43) Veröffentlichungstag der Anmeldung: 05.07.2006
(73) Patentinhaber: Jörn GmbH, 71336 Waiblingen (DE)
(72) Erfinder: Zawadzki, Bernd, 71409 Schwaikheim (DE); Seck, Gerhard, 73630 Remshalden (DE); Krauter, Thomas, 71540 Murrhardt (DE)
(74) Vertreter: Liebl, Thomas

(56) Entgegenhaltungen:
- EP-A- 0 496 949
- DE-A1- 19 538 104
- DE-A1- 19 627 753
- US-A- 1 992 631
- US-A- 3 689 102

## Beschreibung

Die Erfindung betrifft ein Achslenkerlager eines Kraftfahrzeugs mit einem Elastomer-Metall-Gelenklager nach dem Oberbegriff des Anspruchs 1.

Ein bekanntes Achslenkerlager, insbesondere als Zentralgelenk an einem Dreieckslenker (DE 100 32 961 A1) weist ein lenkerendseitiges metallisches Aufnahmeauge als erstes Lagerteil auf sowie ein längliches Lagerinnenteil, das in das Aufnahmeauge eingesetzt ist und das mit wenigstens einer Anschlusspratze aus dem Bereich des Aufnahmeauges vorsteht. Die Anschlusspratze ist mit einer aufbauseitigen Lagerstelle mittels Schrauben verbunden. Zwischen dem Lagerinnenteil und dem Aufnahmeauge liegt ein vorgespannter Elastomerkörper.

Konkret sind hier sowohl das Zentralgelenk am Dreieckslenker als auch die beiden anderen Gelenke als Kugelgelenke mit einem balligen Lagerinnenteil und jeweils zwei aus dem Aufnahmeauge gegenüberliegend abstehenden Anschlusspratzen ausgebildet. Die Anschlusspratzen sind kurze, jeweils gleiche Pratzenstummel mit Anschlussbohrungen. In üblicher Weise erfolgt hier der Anschluss des Zentralgelenks an der Oberseite eines Achskörpers über einen dort angebrachten Lagerbock, mit dem die Anschlusspratzen des Zentralgelenks verbunden sind. Diese Anschlusstechnik ist durch den erforderlichen Lagerbock als Adapterteil aufwendig und führt zu einer großen Aufbauhöhe.

Ein weiter bekanntes Gelenklager (DE 196 27 753 C2) zur Lagerung von Achslenkern weist ein Innenteil auf, das im Bereich eines Aufnahmeauges rotationssymmetrisch ballig ausgebildet ist und in Richtung der Rotationsachse mit zwei Anschlusspratzen gegenüberliegend aus dem Aufnahmeauge herausgeführt ist. Auch diese beiden Anschlusspratzen sind mit standardisierten kurzen Abmessungen für den Anschluss an individuell an Fahrzeugaufbauten oder Achskörpern für Anpass- oder Überbrückungszwecke angeordneten Aufbauteilen vorgesehen. Konkret weist hier das Lagerinnenteil eine Doppelkonusform auf und das Aufnahmeauge hat einen zylindrischen Innenraum. Ein Elastomerkörper zwischen dem Lagerinnenteil und dem Aufnahmeauge ist in einer mittigen Radialebene in zwei Elastomer-Metall-Halbschalen geteilt, welche jeweils axial auf das Lagerinnenteil aufgesteckt sind und den balligen Bereich des Lagerinnenteils übergreifen. Diese Schalenteile sind zudem über die axial abstehenden Anschlusspratzen gesteckt, zwischen beidseitigen Stützringen axial vorgespannt und mittels Federringen gehalten.

Weiter ist ein gattungsgemäßes Lenkerlager eines Kraftfahrzeugs für eine Pendelstütze mit einem Elastomer-Metall-Gelenklager bekannt (DE-A-195 38 104) mit einem lenkerendseitigen, metallischen Aufnahmeauge als erstem Lagerteil, mit einem länglichen Lagerinnenteil als zweitem Lagerteil, das in das Aufnahmeauge eingesetzt ist und das mit Anschlusspratzen aus dem Bereich des Aufnahmeauges vorsteht, wobei die Anschlusspratzen mit einer aufbauseitigen Lagerstelle mittels Schrauben verbindbar sind. Die geometrische Anpassung und Überbrückung zwischen der Lage des Aufnahmeauges und der Lage und Geometrie der aufbauseitigen Lagerstelle ist durch eine angepasste Form der Anschlusspratzen durchgeführt. Zwischen dem Lagerinnenteil und dem Aufnahmeauge ist hier ein Elastomerkörper eingepresst und vorgespannt. Dies ist in einem separaten Vormontageschritt auszuführen, sodass ein ggf. zweckmäßiger Zusammenbau des Elastomer-Metall-Gelenklagers oder ein Austausch des Elastomerkörpers unmittelbar am Lagerort nicht möglich ist. Beim Gelenklager nach DE 196 27 753 C2 wird dagegen der Elastomerkörper durch zwei Gummi-Metall-Schalenringe gebildet, die axial über die Anschlusspratzen auf das ballige Lagerinnenteil aufgesteckt werden, was bei den dortigen axial ausgerichteten Pratzenstummeln einfach möglich ist. Wenn diese Anschlusspratzen durch abgewinkelte, oder verdrehte oder gebogene Pratzenverlängerungen nicht mehr insgesamt axial gerichtet sind, kann es insbesondere bei engen Bögen nicht oder nur mehr schwierig möglich sein, solche Gummi-Metall-Schalenringe für ein axiales Zusammenspannen aufzustecken.

Aufgabe der Erfindung ist es daher, ein gattungsgemäßes Achslenklager so weiterzubilden, dass ein einfacher Zusammenbau und eine einfache Montage ggf. auch unmittelbar am Lagerort möglich sind.

Diese Aufgabe wird mit den Merkmalen des Anspruchs 1 gelöst.

Gemäß Anspruch 1 ist das Lagerinnenteil im Bereich des Aufnahmeauges rotationssymmetrisch ballig ausgebildet und mit wenigstens einer vorzugsweise zwei Anschlusspratzen aus dem Aufnahmeauge geführt. Der Elastomerkörper ist mehrteilig ausgebildet und übergreift den balligen Bereich des Lagerinnenteils. Das Aufnahmeauge ist in einer Axialebene geteilt dergestalt, dass ein Aufnahmeschalenteil als Achslenkerschale etwa in einem rechten Winkel mit dem Achslenker verbunden ist und das andere Aufnahmeschalenteil als abnehmbare Deckelschale über Spannschrauben mit der Achslenkerschale unter Aufbringung der Vorspannung im Elastomerkörper verbunden ist. Dabei ist bevorzugt auch der Elastomerkörper entsprechend in einer Axialebene geteilt, so dass die Elastomerkörperteile bei der Montage in die Aufnahmeschalenteile radial einlegbar sind. Anschließend wird die Deckelschale aufgesetzt und durch Anziehen der Spannschrauben die Vorspannung im Elastomerkörper aufgebracht. Die Montage und das Aufbringen der Vorspannung erfolgt in radialer Richtung und kann auch unmittelbar am Lagerort, ggf. auch bei beengten Verhältnissen durchgeführt werden.

Grundsätzlich kann die ballige Ausbildung am Lagerinnenteil je nach den erforderlichen Gegebenheiten dimensioniert werden, insbesondere kugelartig ausgeführt sein. Gemäß Anspruch 2 kann bei entsprechenden Anforderungen an die Lagerstelle der ballige Bereich des Lagerinnenteils durch eine mittlere Zylinderform gebildet sein, die sich nach beiden Seiten zu seitlichen Zylinderformen verjüngt und damit eine Doppelkonusform bildet. Der Elastomerkörper bzw. dessen Teile umfassen dabei die Doppelkonusform und jeweils einen Teil der seitlichen Zylinderformen.

In einer besonders bevorzugten Ausführungsform nach Anspruch 3 weisen die Aufnahmeschalenteile im geschlossenen Zustand etwa eine Innenkontur entsprechend einer Negativform der Form des Lagerinnenteils auf, wobei zwischen den Aufnahmeschalenteilen und dem Lagerinnenteil ein Aufnahmespaltraum für den mehrteiligen, vorgespannten Elastomerkörper ausgebildet ist. Dies bedeutet, dass der Elastomerkörper vor dem Zusammenspannen für das Aufbringen einer Vorspannung eine größere Wandstärke als die Spaltbreite im Bereich des zugeordneten Aufnahmespaltraums aufweisen muss.

Gemäß Anspruch 4 soll die Spaltbreite des Aufnahmespalts an allen Stellen etwa gleich sein. Der Elastomerkörper ist aus Eiastomer-Metall-Körperschalenteilen mit etwa gleicher Wandstärke zusammengesetzt. Diese Wände bestehen aus einer zwischen Blechschalenteilen einvulkanisierten Elastomerschicht, wobei auch hier die Wandstärke im nicht vorgespannten Herstellzustand größer als die Spaltbreite des Aufnahmespaltraums ist. Die Elastomer-Metall-Körperschalenteile sind dabei entsprechend der Form des Aufnahmespaltraums vorgeformt. Die Blechschalenteile dienen der Vergleichmäßigung der Elastomervorspannung in den Wänden. Vorzugsweise sind diese Blechschalenteile aus Metall hergestellt. Grundsätzlich können sie jedoch auch aus Kunststoffmaterial hergestellt werden, was hier ebenfalls mitumfasst sein soll.

Zur Erhöhung der Reibung gegen eine Relativverdrehung kann bei Bedarf nach Anspruch 5 auf den Blechschalenteilen nach außen, insbesondere auf den lagerinneren Blechschalenteilen, ein Elastomerfilm angebracht werden.

Nach Anspruch 6 kann der mehrteilige Elastomerkörper grundsätzlich radial oder axial geteilt sein, wobei für eine einfache Montage eine axiale Teilung zu bevorzugen ist. Zudem kann je nach den Gegebenheiten eine radiale und axiale Teilung in mehr als zwei Elastomerkörperteile zweckmäßig sein.

In einer konkreten Ausführungsform nach Anspruch 7 ist der Elastomerkörper vorzugsweise als Gummi-Metallkörper mit lagerinneren und lageräußeren Blechschalenteilen und dazwischen einvulkanisierter Elastomerschicht insgesamt axial in zwei Elastomerkörper-Schalenteile geteilt. Im vorgespannten Zustand nach der Montage der Deckelschale ist dann im wesentlichen eine radiale Vorspannung in der Elastomerschicht aufgebracht.

In einer alternativen Ausführungsform nach Anspruch 8 ist auch hier der Elastomerkörper entsprechend in zwei Elastomerkörper-Schalenteile geteilt, wobei die Gummischicht jedes Elastomerkörper-Schalenteils und das lageräußere Blechschalenteil im nicht vorgespannten Zustand jeweils durch einen radialen mittleren Spalt voneinander beabstandet sind. Im vorgespannten Zustand ist dann wenigstens der Spalt in der Gummischicht durch eine aufgebrachte radiale und axiale Vorspannung geschlossen.

In einer weiteren alternativen Ausführungsform nach Anspruch 9 ist eine Elastomerkörper mit lagerinneren und lageräußeren Blechschalenteilen insgesamt axial und radial in vier Elastomerkörper-Schalenteile geteilt, die im montierten und vorgespannten Zustand durch eine aufgebrachte radiale und axiale Vorspannung mit ihren benachbarten Rändern weitgehend zusammengeführt sind.

Durch die vorstehenden Alternativen werden je nach den Gegebenheiten und Erfordernissen geeignete Lagerauslegungen und Dimensionierungen in weiten Grenzen möglich.

Für eine stabile, raumsparende Konstruktion des geteilten Aufnahmeauges wird mit Anspruch 10 vorgeschlagen, dass die Schalenteile dickwandig und in der Außenform als Halbkreis-Halbschalen ausgebildet sind und formschlüssig an entsprechend strukturierten Anlageflächen aneinander liegen. Die Spannschrauben, vorzugsweise vier gegeneinander versetzte Spannschrauben, sind dabei etwa senkrecht durch die Anlagefläche geführt, wobei geeignete Abstützflächen für die Schraubenköpfe und gegebenenfalls Schraubenmuttern vorzusehen sind. Vorzugsweise werden jedoch unmittelbar an den Anlageflächen der Achslenkerschale Gewindebohrungen eingebracht, so dass keine zusätzlichen Schraubenmuttern erforderlich sind. Zudem wird ein hinsichtlich seiner Festigkeit und seines Gewichts besonders bevorzugter Lenker, insbesondere ein Dreieckslenker vorgeschlagen, der aus Aluminium als Schmiedeteil hergestellt ist. Ein solcher Dreieckslenker ist dabei im Bereich des Zentralgelenk-Aufnahmeauges verstärkt auszuführen.

Durch die geometrische Anpassung und Überbrückung zwischen der Lage des Aufnahmeauges und der Lage der Lageranschlussstelle durch eine angepasste Form der wenigstens einen Anschlusspratze ist es in vielen Fällen möglich, den Gelenklageranschluss unmittelbar am Fahrzeugaufbau oder an Achsteilen ohne aufwendige Adapterkonstruktionen durchzuführen. Konkret wird dazu mit Anspruch 11 vorgeschlagen, dass die wenigstens eine Anschlusspratze aus einem aus dem Aufnahmeauge vorstehenden Pratzenzapfen und wenigstens einer daran anschließenden und Bohrungen für Anschlussschrauben enthaltenden Pratzenverlängerung besteht, welche zu Anpasszwecken gegenüber der Pratzenzapfenrichtung abgewinkelt und/oder verdreht und/oder gebogen ist. Besonders günstig ist hier nach Anspruch 12, wenn eine solche Pratzenverlängerung mit etwa einem Rechteckquerschnitt für eine flächige Anlage an der zugeordneten Lagerstelle ausgebildet ist. Eine oder mehrere Pratzenverlängerungen an einem Pratzenzapfen können dabei U-Formen, T-Formen oder Kurbel-Formen bilden, wobei diese Formen an einer oder beiden Seiten des Aufnahmeauges realisierbar sind. Ersichtlich sind bei diesen Gestaltungsmöglichkeiten direkte Anbindungen und Anpassungen eines Lagerinnenteils mit Anschlusspratzen bei unterschiedlichen Gegebenheiten möglich.

In einer besonders bevorzugten Ausführungsform nach Anspruch 13 ist das Lagerinnenteil insgesamt U-förmig ausgebildet, wobei die Pratzenverlängerungen die U-Schenkel bilden und jeweils zwei untereinander beabstandete und gegenüber dem Aufnahmeauge versetzt liegende Bohrungen für Anschlussschrauben aufweisen. Damit kann das Platz beanspruchende Aufnahmeauge vorteilhaft neben und versetzt zu einer Anschlussstelle angebracht werden, wobei die U-Schenkel zur Abstandsüberbrückung dienen. Besonders vorteilhaft kann nach Anspruch 14 damit ein Zentralgelenk eines Dreieckslenkers stabil seitlich eines Achskörpers mit vorzugsweise horizontal oder vertikal gerichteten Pratzenverlängerungen angeordnet werden. Durch die Einsparung des sonst üblichen Lagerbocks fällt dieses Bauteil weg und die Aufbauhöhe kann reduziert werden, wodurch sich zudem konstruktive Freiräume ergeben.

Anhand einer Zeichnung wird die Erfindung näher erläutert.

Es zeigen:
- Fig. 1: eine erste Ausführungsform eines Dreieckslenkers,
- Fig. 2: eine erste Anschlussmöglichkeit des Dreieckslenkers nach Fig. 1 an einem Achskörper,
- Fig. 3: eine alternative Anschlussmöglichkeit,
- Fig. 4: eine zweite Ausführungsform eines Dreieckslenkers,
- Fig. 5: eine Draufsicht auf unterschiedliche Anschlussanordnungen,
- Fig. 6: eine Seitenansicht der Anordnung nach Fig. 5,
- Fig. 7: eine Seitenansicht eines montierten Lagers,
- Fig. 8: ein Schnitt durch das Lager nach Fig. 7 entlang der Linie A-A mit einer ersten Innenausbildung,
- Fig. 9: einen Schnitt entsprechend Fig. 7 mit einer zweiten Innenausbildung, und
- Fig. 10: einen Schnitt entsprechend Fig. 7 mit einer dritten Innenausbildung.

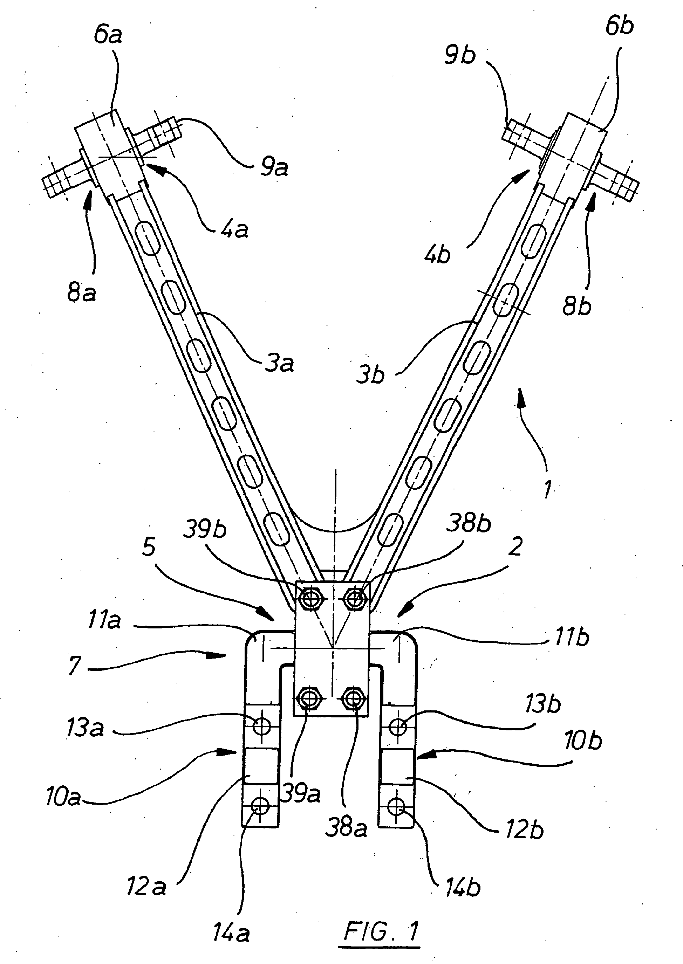

In Fig. 1 ist ein Dreieckslenker 1 dargestellt mit einem Zentralgelenklager 2 und davon ausgehenden Lenkerschenkeln 3a, 3b mit jeweils endseitigen Gelenklagern 4a und 4b. Der Dreieckslenker 1 ist aus Aluminium als Schmiedeteil hergestellt.

Das Zentralgelenklager 2 sowie die endseitigen Gelenklager 4a, 4b sind jeweils aus einem Aufnahmeauge 5 sowie 6a und 6b einem Lagerinnenteil 7 sowie 8a und 8b und einem weiter unten erläuterten Elastomerkörper zwischen Aufnahmeauge und Lagerinnenteil gebildet.

Bei den endseitigen Gelenklagern 4a, 4b ragt jeweils das Lagerinnenteil 8a, 8b mit Anschlusspratzen 9a, 9b axial aus dem Aufnahmeauge 6a bzw. 6b beidseitig heraus. Die Anschlusspratzen 9a, 9b sind relativ kurz und jeweils mit einer Schraubenbohrung versehen für eine übliche bekannte Anschlusstechnik. Ersichtlich sind hier beim Einsatz des Dreieckslenkers 1 als Achslenker für den Anschluss der Anschlusspratzen 9a, 9b an Längsträgern des Fahrzeugaufbaus übliche Lagerböcke vorzusehen.

In Verbindung mit dem Zentralgelenklager 2 ist dagegen die erfindungsgemäße Anschlusstechnik gezeigt: auch hier steht das Lagerinnenteil 7 beidseitig mit Anschlusspratzen 10a, 10b aus dem Aufnahmeauge 5 vor. Diese Anschlusspratzen 10a, 10b bestehen jedoch hier jeweils aus einem aus dem Aufnahmeauge 5 axial abstehenden Pratzenzapfen 10a, 10b, an den sich jeweils eine Pratzenverlängerung 12a, 12b anschließt. Die beiden Pratzenverlängerungen 12a, 12b bilden U-Schenkel eines insgesamt U-förmigen Lagerinnenteils und weisen jeweils beabstandete Schraubenbohrungen 13a, 13b und 14a, 14b auf. Wie aus der Draufsicht nach Fig. 1 ersichtlich, sind die Pratzenverlängerungen 12a, 12b so lange gewählt, dass die Schraubebohrungen 13a, 13b und 14a, 14b versetzt gegenüber dem Bereich des Aufnahmeauges 5 liegen.

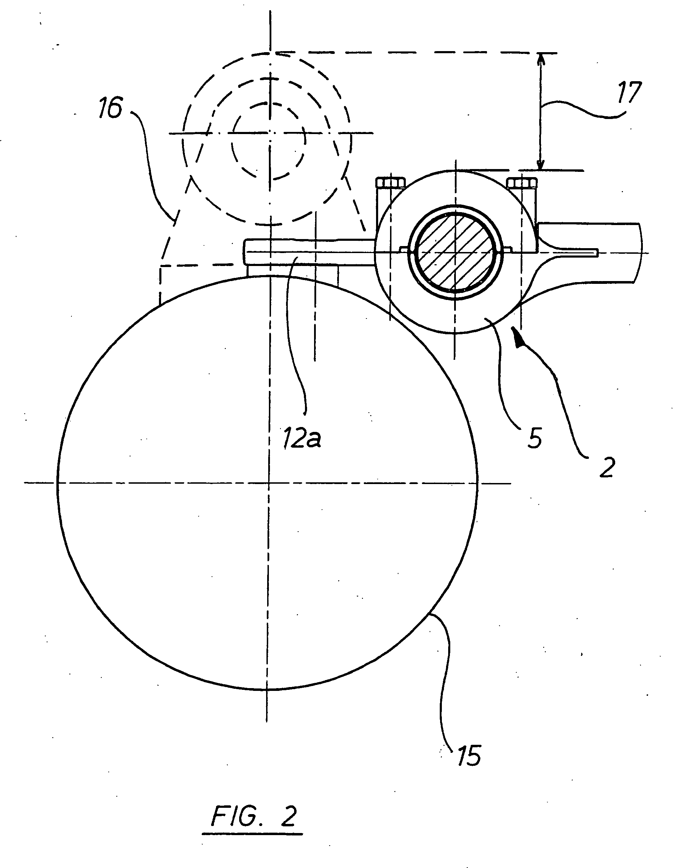

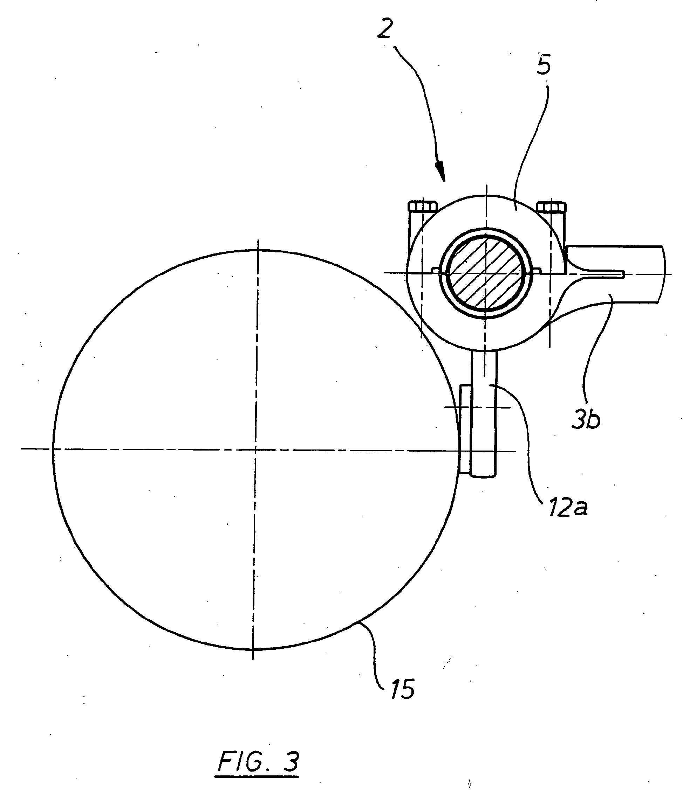

Damit ergibt sich nach Fig. 2 und Fig. 3 eine Montagemöglichkeit des Zentralgelenklagers 2 an einem Achskörper 15, welche zu einer Höhenreduzierung der Anordnung führt. Die Anbindung des Zentralgelenklagers 2 am Achskörper 15 erfolgt in der Anordnung nach Fig. 2 oben mit horizontal ausgerichteten Pratzenverlängerungen 12a, 12b. Damit liegt das Aufnahmeauge 5 des Zentralgelenklagers 2 weitgehend versetzt und neben dem Achskörper 15. Gegenüber der strichliert eingezeichneten Anordnung nach dem Stand der Technik mit einem zusätzlichen Lagerbock auf dem Achskörper 15 ergibt sich ersichtlich eine Reduzierung 17 der Aufbauhöhe.

Nach Fig. 3 lässt sich noch weiter Bauhöhe reduzieren, wenn das Zentralgelenklager 2 mit dem U-förmigen Lagerinnenteil bzw. mit vertikal ausgerichteten Pratzenverlängerungen 12a, 12b seitlich am Achskörper 15 befestigt ist.

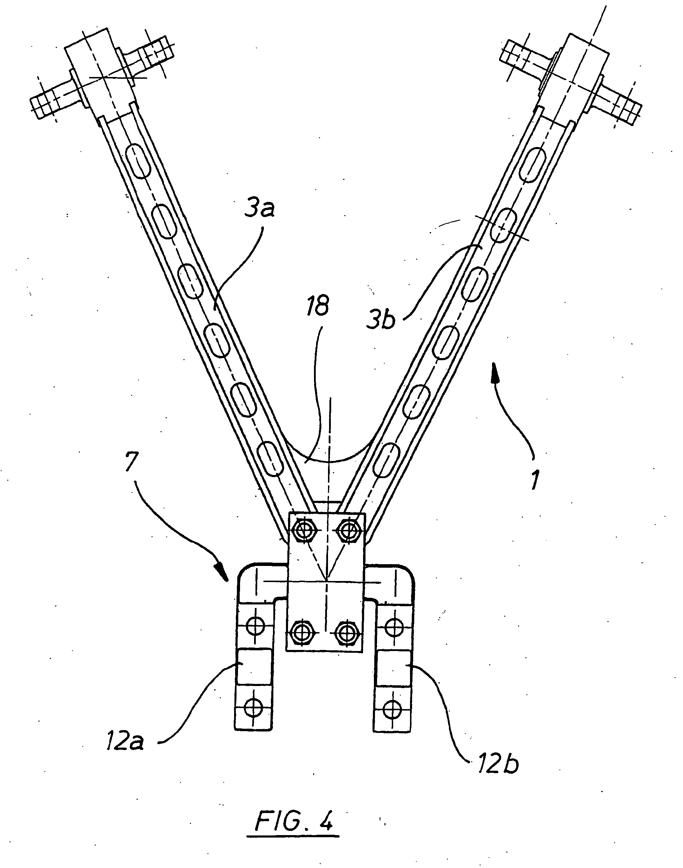

In Fig. 4 ist ein Dreieckslenker dargestellt, der weitgehend ähnlich dem Dreieckslenker aus Fig. 1 ist. Zur Darstellung der Variationsmöglichkeiten in der Anschlusstechnik ist hier das U-förmige Lagerinnenteil 7 mit kürzeren U-Schenkeln bzw. mit kürzeren Pratzenverlängerungen 12a, 12b dargestellt, wobei je nach den Gegebenheiten auch eine längere Pratzenverlängerung nach Fig. 1 mit einer kürzeren Pratzenverlängerung nach Fig. 4 kombinierbar wäre. Im Bereich des Zusammentreffens der Lenkerschenkel 3a und 3b ist zudem eine Verstärkung 18 vorgenommen.

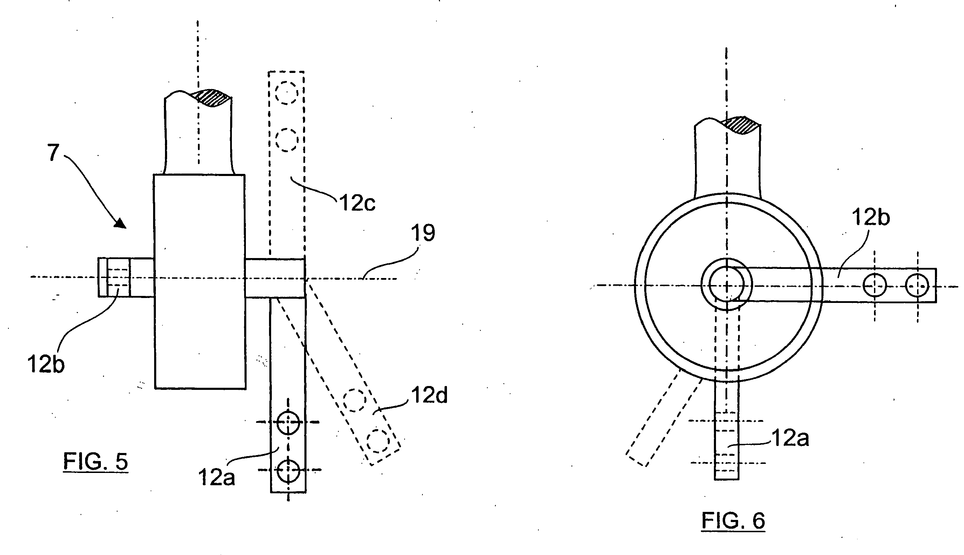

In den Fig. 5 und 6 sind weitere Anpassungsmöglichkeiten an unterschiedliche aufbauseitige Lagerstellen unter Verwendung der Erfindung schematisch dargestellt, wobei Fig. 5 eine Draufsicht und Fig. 6 die entsprechende Seitenansicht zeigt:

Die Pratzenverlängerung 12a kann beispielsweise durch eine weitere strichliert eingezeichnete Pratzenverlängerung 12c insgesamt zu einer T-Form ergänzt sein. Zudem kann die Pratzenverlängerung 12a, wie in der strichlierten Darstellung 12d gezeigt, in einem im Vergleich zu einem rechten Winkel kleineren Winkel zur Lagerachse 19 angestellt sein. Die gegenüberliegende Pratzenverlängerung 12b liegt bezüglich der Pratzenverlängerung 12a nicht in einer Ebene, sondern ist um 90° um die Lagerachse verdreht angebracht. Die Pratzenverlängerungen 12a, 12b haben einen rechteckigen Querschnitt mit Schraubenbohrungen durch die Breitseite. Diese Breitseiten und damit die Richtung der Schraubenbohrungen können ebenfalls, wie aus den Fig. 5 und 6 ersichtlich, verdreht angeordnet werden. Weiter wäre es möglich, die Pratzenverlängerungen 12a, 12b bei Bedarf bogenförmig auszubilden. Ein entsprechend geformtes Lagerinnenteil 7 kann als Gussteil oder Schmiedeteil hergestellt werden.

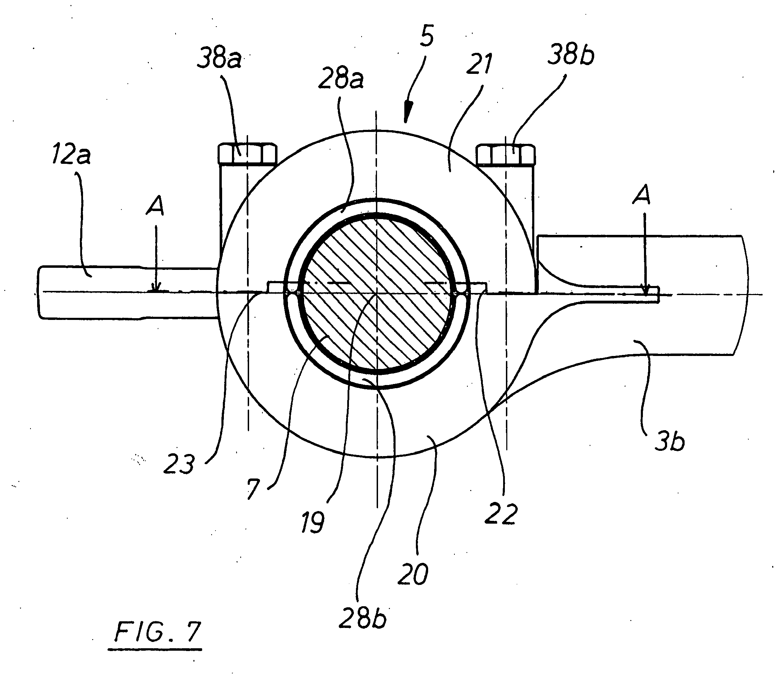

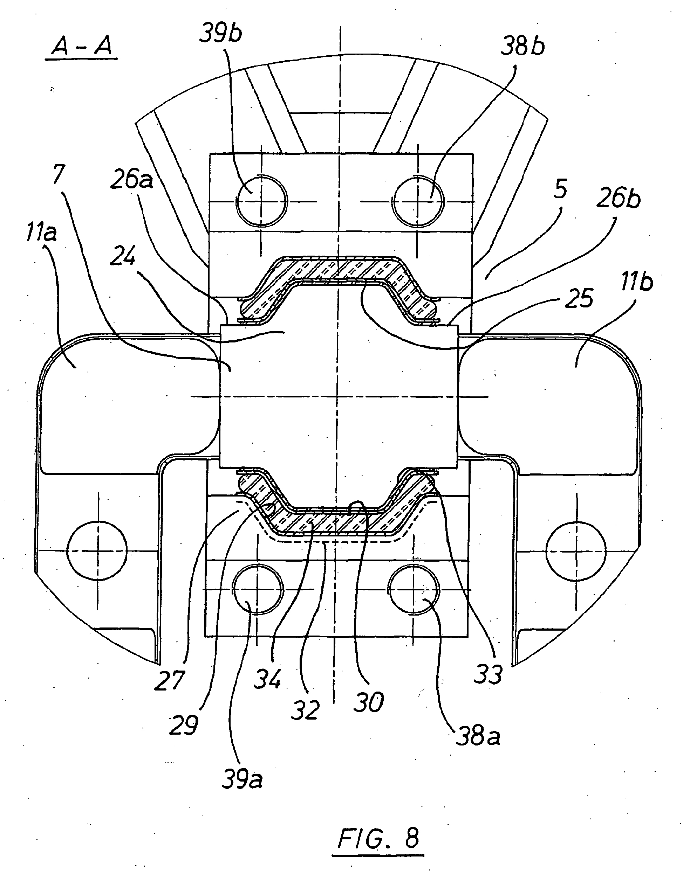

In den Fig. 7 und 8 ist der Aufbau des Zentralgelenklagers 2 im Einzelnen dargestellt, wobei Fig. 8 einen Schnitt entlang der Linie A-A zeigt:

An den Enden der Lenkerschenkel 3a, 3b ist in einem rechten Winkel zur Lagerachse 19 ein unteres Aufnahmeschalenteil 20 fest angebracht. Darüber ist eine Deckelschale 21 mittels einer Stufenstruktur 22 an den Anlageflächen 23 formschlüssig aufgesetzt und mittels vier Spannschrauben 38a, 38b, 39a, 39b verschraubt. Die Verschraubung erfolgt in Gewindebohrungen (sh. Fig. 8) an den Anlageflächen des Aufnahmeschalenteils 20. Das Aufnahmeschalenteil 20 und die Deckelschale 21 bilden im geschlossenen und verspannten Zustand das Aufnahmeauge 5.

Das Lagerinnenteil 7 ist im Bereich des Aufnahmeauges 5 ballig ausgeführt und mit den Pratzenzapfen 11a, 11 b aus dem Aufnahmeauge 5 herausgeführt. Konkret ist hier der ballige Bereich durch eine Doppelkonusform 24 gebildet, die sich aus einer mittleren Zylinderform 25 ergibt, welche sich zu beiden Seiten zu seitlichen Zylinderformen 26a, 26b verjüngt.

Das Aufnahmeschalenteil 20 und die Deckelschale 21 haben im geschlossenen Zustand etwa eine Innenkontur entsprechend einer Negativform der Doppelkonusform 24 des Lagerinnenteils 7, wobei zwischen den Schalenteilen 20, 21 und dem Lagerinnenteil 7 ein Aufnahmespaltraum für einen zweiteiligen, vorgespannten Elastomerkörper 27 ausgebildet ist. Der Elastomerkörper ist hier axial in zwei Elastomerkörper-Schalenteile 28a, 28b geteilt (sh. Fig. 7), die in Radialrichtung vor dem Zusammenspannen in den Bereich des Aufnahmespaltraums eingelegt werden.

Die Elastomerkörper-Schalenteile 28a und 28b haben durchgehend etwa die gleiche Wandstärke und übergreifen den Doppelkonusbereich. Die Wände sind jeweils aus einer zwischen Blechschalenteilen 29 und 30 einvulkanisierten Elastomerschicht 31 gebildet. Auf der lagerinneren Seite der lagerinneren Blechschale 30 ist zudem ein Elastomerfilm 31 aufgebracht. Die Wandstärke der Elastomerkörper-Schalenteile 28a, 28b ist im nicht vorgespannten Zustand größer als die Spaltbreite des Aufnahmespaltraums und wird durch Aufbringung der radialen Vorspannung verkleinert. Die Ausgangsstellung und die Wandstärke vor dem Zusammenspannen ist mit der strichlierten Linie 32 in Fig. 8 eingezeichnet.

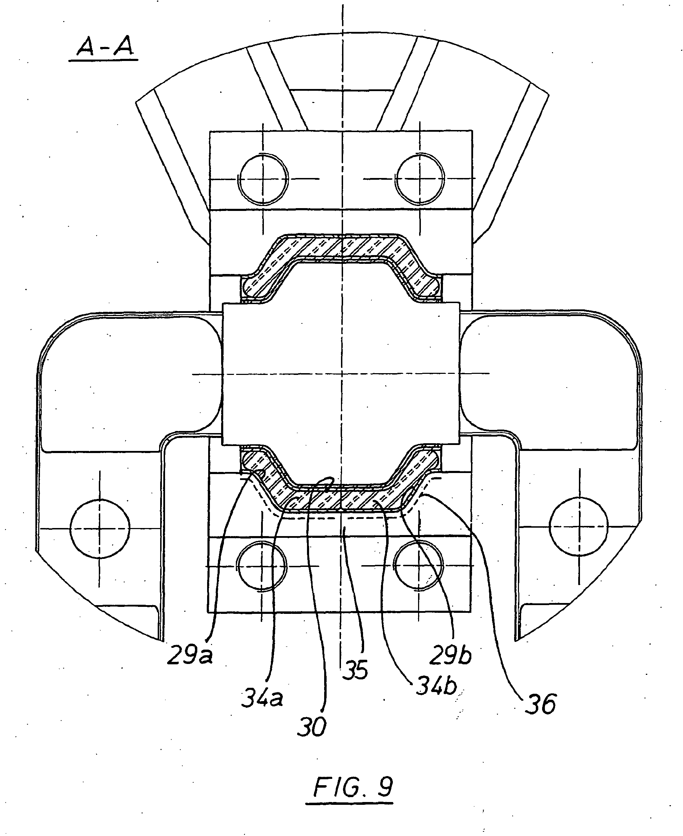

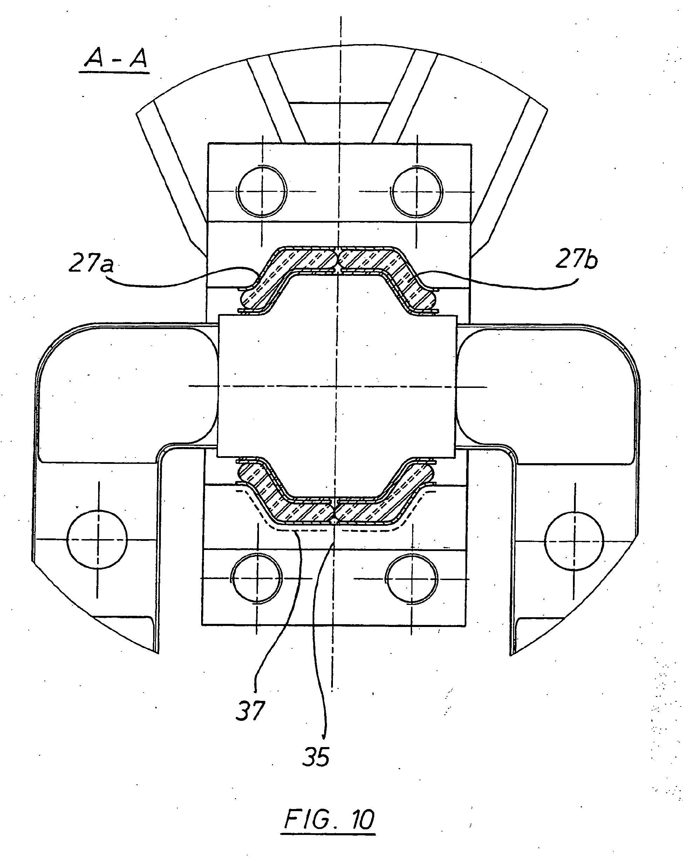

In den Fig. 9 und 10 sind Ausführungsformen gezeigt, die der in Fig. 8 weitgehend entsprechen und sich lediglich hinsichtlich der Ausbildung der Elastomerkörper-Schalenteile unterscheiden, so dass in diesen Figuren nur die unterschiedlichen Teile weiter beschrieben sind:

In Fig. 9 sind ebenfalls zwei Elastomerkörper-Schalenteile wie in Fig. 8 verwendet, wobei das lagerinnere Blechschalenteil 30 wie in Fig. 8 ausgeführt ist. Das lageräußere Blechschalenteil und die Elastomerschicht 34 sind dagegen im nicht vorgespannten Zustand jeweils durch einen radialen mittleren Spalt 35 (angedeutet in der strichlierten Linie 36) in Blechschalenteile 29a, 29b und Elastomerschichtbereiche 34a, 34b geteilt, welche jedoch durch das lagerinnenseitige Blechschalenteil 30 zusammenhängen. Aus Fig. 9, die den vorgespannten Zustand zeigt, ist ersichtlich, dass nach der Endmontage zumindest der Spalt 35 in der Elastomerschicht 34 geschlossen ist.

In der weiteren Ausführungsform nach Fig. 10 ist im Vergleich zu Fig. 9 auch noch das lagerinnere Blechschalenteil radial geteilt, so dass im Herstellzustand insgesamt vier separate Elastomerkörperteile 27a, 27b (28a, 28b nicht gezeigt) vorliegen. Auch hier ist der Herstellzustand mit einer strichlierten Linie 37 eingezeichnet, woraus ein Spalt 35 im nicht vorgespannten Zustand ersichtlich ist. Auch hier ist der Spalt 35 nach dem Vorspannen weitgehend geschlossen. Zusätzlich zu einer radialen Vorspannung ergibt sich in den Ausführungsformen der Fig. 8 und Fig. 9 eine axiale Vorspannung im Elastomerkörper 27.

Der dargestellte Dreieckslenker 1 kann komplett, wie in den Fig. 1 und 4 dargestellt, vormontiert und ausgeliefert werden. Um die Montage im Fahrzeug zu vereinfachen ist es möglich, dem Lagerinnenteil 7 bzw. den U-Schenkeln eine Vorwinkelung zu geben. In einer weiteren Montagevariante kann der Dreieckslenker 1 mit den aufbauseitigen Gelenklagern 4a, 4b vormontiert ausgeliefert werden, wobei die Deckelschale und die Elastomerkörperteile 27 des Zentralgelenklagers 2 als Losteile mitgeliefert werden. Achsseitig sind dann die Anschlusspratzen 10a, 10b am Achskörper vorzumontieren und danach bei eingelegten Elastomerkörperteilen die Deckelschale 21 zu verschrauben.

## Patentansprüche

1. Achslenkerlager eines Kraftfahrzeugs mit einem Elastomer-Metall-Gelenklager,
mit einem lenkerendseitigen, metallischen Aufnahmeauge (5) als erstem Lagerteil,
mit einem länglichen Lagerinnenteil (7) als zweitem Lagerteil, das in das Aufnahmeauge (5) eingesetzt ist und das mit wenigstens einer Anschlusspratze (10a, 10b) aus dem Bereich des Aufnahmeauges (5) vorsteht, wobei die Anschlusspratze (10a, 10b) mit einer aufbauseitigen Lagerstelle mittels Schrauben verbindbar ist, und
mit wenigstens einem vorgespannten Elastomerkörper (27) zwischen dem Lagerinnenteil (7) und dem Aufnahmeauge (5),
wobei die geometrische Anpassung und Überbrückung zwischen der Lage des Aufnahmeauges (5) und der Lage und Geometrie der aufbauseitigen Lagerstelle (15) durch eine angepasste Form der wenigstens einen Anschlusspratze (10a, 10b) durchgeführt ist, wobei die geometrische Anpassung in der Anschlusspratze (10a, 10b) integriert ist,
**dadurch gekennzeichnet,**
**dass** das Lagerinnenteil (7) im Bereich des Aufnahmeauges (5) rotationssymmetrisch ballig (25) ausgebildet ist und mit wenigstens einer Anschlusspratze (10a, 10b) aus dem Aufnahmeauge (5) geführt ist,
- **dass** der Elastomerkörper (27) mehrteilig ausgebildet ist und den balligen Bereich (25) des Lagerinnenteils (7) übergreift, und
- **dass** das Aufnahmeauge (5) in einer Axialebene längsgeteilt ist, dergestalt dass ein Aufnahmeschalenteil als Achslenkerschale (20) etwa in einem rechten Winkel mit einem Achslenker (3a, 3b) verbindbar ist und das andere Aufnahmeschalenteil als abnehmbare Deckelschale (21) über Spannschrauben (38a, 38b, 39a, 39b) mit der Achslenkerschale (20) unter Aufbringung der Vorspannung im Elastomerkörper (27) verbindbar ist.

2. Achslenkerlager nach Anspruch 1, **dadurch gekennzeichnet, dass** der ballige Bereich des Lagerinnenteils (7) durch eine mittlere Zylinderform (25) gebildet ist, die sich nach beiden Seiten zu seitlichen Zylinderformen (26a, 26b) verjüngt und eine Doppelkonusform (24) bildet, wobei durch den Elastomerkörper (27) die Doppelkonusform (24) mit jeweils einem Teil der seitlichen Zylinderformen (26a, 26b) umfasst ist.

3. Achslenkerlager nach Anspruch 1 oder 2, **dadurch gekennzeichnet, dass** die Aufnahmeschalenteile (20, 21) im geschlossenen Zustand etwa eine Innenkontur entsprechend einer Negativform der Form (24) des Lagerinnenteils (7) aufweisen, wobei zwischen den Aufnahmeschalenteilen (20, 21) und dem Lagerinnenteil (7) ein Aufnahmespaltraum für den mehrteiligen, vorgespannten Elastomerkörper (27) ausgebildet ist.

4. Achslenkerlager nach Anspruch 3, **dadurch gekennzeichnet, dass** die mehreren Teile des Elastomerkörpers als Elastomer-Metall-Körperschalenteile (27) zusammengesetzt einen an die Form des Lagerinnenteils (7) angepassten, den balligen Bereich (24) einschließenden Raumkörper mit Wänden etwa gleicher Wandstärke bilden, und
dass diese Wände jeweils aus einer zwischen Blechschalenteilen (29, 30) einvulkanisierten Elastomerschicht (34) bestehen, wobei die Wandstärke im nicht vorgespannten Zustand größer als die Spaltbreite des Aufnahmespaltraums ist.

5. Achslenkerlager nach Anspruch 4, **dadurch gekennzeichnet, dass** zumindest teilweise auf den der Elastomerschicht (34) abgewandten Seiten der Blechschalenteile (29, 30), insbesondere auf den lagerinneren Blechschalenteilen (29) ein Elastomerfilm (31) angebracht ist.

6. Achslenkerlager nach einem der Ansprüche 1 bis 5, **dadurch gekennzeichnet, dass** der mehrteilige Elastomerkörper (27) radial und/oder axial geteilt ist.

7. Achslenkerlager nach Anspruch 6, **dadurch gekennzeichnet, dass** ein Elastomerkörper (27), vorzugsweise als Gummi-Metall-Körper mit lagerinneren und lageräußeren Blechschalenteilen (29, 30) und dazwischen einvulkanisierter Elastomerschicht (34) insgesamt axial in zwei Elastomerkörperschalenteile (28a, 28b) geteilt ist und im vorgespannten Zustand eine im Wesentlichen radiale Vorspannung in der Elastomerschicht (34) aufgebracht ist.

8. Achslenkerlager nach Anspruch 6, **dadurch gekennzeichnet, dass** ein Elastomerkörper (27) mit lagerinneren und lageräußeren Blechschalenteilen (29, 30) radial in zwei Elastomerkörperschalenteile (28a, 28b) geteilt ist und die Elastomerschicht (34) jedes Elastomerkörperschalenteils (28a, 28b) und das lageräußere Blechschalenteil (30) im nicht vorgespannten Zustand jeweils durch einen radialen mittleren Spalt (35) voneinander beabstandet sind, wobei wenigstens der Spalt in der Elastomerschicht (34) im vorgespannten Zustand durch eine aufgebrachte radiale und axiale Vorspannung geschlossen ist.

9. Achslenkerlager nach Anspruch 6, **dadurch gekennzeichnet, dass** ein Elastomerkörper (27) mit lagerinneren und lageräußeren Blechschalenteilen (29, 30) insgesamt axial und radial in vier Elastomerkörperschalenteile (27a, 27b) geteilt ist, die im montierten und vorgespannten Zustand durch eine aufgebrachte radiale und axiale Vorspannung mit ihren benachbarten Rändern weitgehend zusammengeführt sind.

10. Achslenkerlager nach einem der Ansprüche 1 bis 9, **dadurch gekennzeichnet,**
**dass** die Achslenkerschale (20) und die Deckelschale (21) dickwandig, in der Außenform als Halbkreis-Halbschalen ausgebildet sind,
**dass** sie über eine gegenseitig zugeordnete Anlagestruktur, vorzugsweise jeweils über eine Längsstufe (22), formschlüssig an Anlageflächen (23) aneinander liegen, und
**dass** die Spannschrauben (38a, 38b) etwa senkrecht durch die Anlageflächen (23) geführt sind, wobei dazu vorzugsweise an den Anlageflächen (23) der Achslenkerschale (20) Gewindebohrungen eingebracht sind.

11. Achslenkerlager nach einem der Ansprüche 1 bis 10, **dadurch gekennzeichnet, dass** die wenigstens eine Anschlusspratze (10a, 10b) aus einem aus dem Aufnahmeauge (5) vorstehenden Pratzenzapfen (11a, 11b) und wenigstens einer daran anschließenden und Bohrungen (13a, 13b, 14a, 14b) für Anschlussschrauben enthaltenden Pratzenverlängerung (12a, 12b) besteht, welche zu Anpasszwecken gegenüber der Pratzenzapfenrichtung abgewinkelt und/oder verdreht und/oder gebogen ist.

12. Achslenkerlager nach Anspruch 11, **dadurch gekennzeichnet, dass** die Pratzenverlängerung (12a, 12b) mit etwa einem Rechteckquerschnitt für eine flächige Anlage an der zugeordneten Lagerstelle ausgebildet ist.

13. Achslenkerlager nach Anspruch 11 oder 12, **dadurch gekennzeichnet, dass** durch am Aufnahmeauge (5) gegenüberliegende Pratzenzapfen (11a, 11b) und zugeordnete Pratzenverlängerungen (12a, 12b) als U-Schenkel ein U-förmiges Lagerinnenteil (7) gebildet ist und vorzugsweise jeweils in einer Pratzenverlängerung (12a, 12b) zwei beabstandete und gegenüber dem Aufnahmeauge (5) versetzt liegende Bohrungen (13a, 13b, 14a, 14b) für Anschlussschrauben angebracht sind.

14. Achslenkerlager nach Anspruch 13, **dadurch gekennzeichnet, dass** das U-förmige Lagerinnenteil (7) ein Bestandteil eines Zentralgelenklagers (2) eines Dreieckslenkers (1) ist und die Pratzenverlängerungen (12a, 12b) mit einem Versatz zum Aufnahmeauge (5) an einem zylindrischen Achskörper (15) vorzugsweise oben horizontal oder seitlich vertikal angeschraubt sind.

## Claims

1. Axle link bearing of a motor vehicle having an elastomer/metal pivot bearing,
having a metallic receiving socket (5) on the end side of the strut as a first bearing part,
having an elongate bearing inner part (7) as a second bearing part which is inserted into the receiving socket (5) and projects with at least one connecting claw (10a, 10b) from the region of the receiving socket (5), it being possible for the connecting claw (10a, 10b) to be connected to a vehicle-body-side bearing point by means of screws, and
having at least one prestressed elastomer element (27) between the bearing inner part (7) and the receiving socket (5),
the geometric adaptation and bridging between the position of the receiving socket (5) and the position and the geometry of the vehicle-body-side bearing point (15) being carried out by an adapted shape of the at least one connecting claw (10a, 10b), the geometric adaptation being integrated into the connecting claw (10a, 10b),
**characterized**
**in that** the bearing inner part (7) is of rotationally symmetrical spherical (25) configuration in the region of the receiving socket (5) and is guided out of the receiving socket (5) with at least one connecting claw (10a, 10b),
- **in that** the elastomer element (27) is of multiple-part configuration and reaches over the spherical region (25) of the bearing inner part (7), and
- **in that** the receiving socket (5) is divided longitudinally in an axial plane in such a way that a receiving shell part as an axle link shell (20) can be connected to an axle link (3a, 3b) approximately at right angles and the other receiving shell part as a removable cover shell (21) can be connected to the axle link shell (20) via clamping, screws (38a, 38b, 39a, 39b) with generation of the prestress in the elastomer element (27).

2. Axle link bearing according to Claim 1, **characterized in that** the spherical region of the bearing inner part (7) is formed by a central cylinder shape (25) which tapers on both sides to lateral cylinder shapes (26a, 26b) and forms a double cone shape (24), the double cone shape (24) being enclosed with in each case one part of the lateral cylinder shapes (26a, 26b) by the elastomer element (27).

3. Axle link bearing according to Claim 1 or 2, **characterized in that** the receiving shell parts (20, 21) approximately have an inner contour in the closed state which corresponds to a negative form of the shape (24) of the bearing inner part (7), a receiving gap space for the multiple-part, prestressed elastomer element (27) being formed between the receiving shell parts (20, 21) and the bearing inner part (7).

4. Axle link bearing according to Claim 3, **characterized in that** the multiple parts of the elastomer element form, assembled as elastomer/metal element shell parts (27), a spatial element which is adapted to the shape of the bearing inner part (7), encloses the spherical region (24) and has walls of approximately identical wall thickness, and
**in that** these walls comprise in each case an elastomer layer (34) which is vulcanized in between sheet-metal shell parts (29, 30), the wall thickness being greater in the non-prestressed state than the gap width of the receiving gap space.

5. Axle link bearing according to Claim 4, **characterized in that** an elastomer film. (31) is attached at least partially on those sides of the sheet-metal shell parts (29, 30) which face away from the elastomer layer (34), in particular on the sheet-metal shell parts (29) on the inside of the bearing.

6. Axle link bearing according to one of Claims 1 to 5, **characterized in that** the multiple-part elastomer element (27) is divided radially and/or axially.

7. Axle link bearing according to Claim 6, **characterized in that** an elastomer element (27), preferably as a rubber/metal element having sheet-metal shell parts (29, 30) on the inside and outside of the bearing and having an elastomer layer (34) which is vulcanized in between them, is divided overall axially into two elastomer element shell parts (28a, 28b) and a substantially radial prestress is applied in the elastomer layer (34) in the prestressed state.

8. Axle link bearing according to Claim 6, **characterized in that** an elastomer element (27) having sheet-metal shell parts (29, 30) on the inside and outside of the bearing is divided radially into two elastomer element shell parts (28a, 28b), and the elastomer layer (34) of each elastomer element shell part (26a, 28b) and the sheet-metal shell part (30) on the outside of the bearing are spaced apart in the non-prestressed state in each case by a radial central gap (35), at least the gap in the elastomer layer (34) being closed in the prestressed state by an applied radial and axial prestress.

9. Axle link bearing according to Claim 6, **characterized in that** an elastomer element (27) having sheet-metal shell parts (29, 30) on the inside and outside of the bearing is divided overall axially and radially into four elastomer element shell parts (27a, 27b) which are largely brought together with their adjacent edges by an applied radial and axial prestress in the mounted and prestressed state.

10. Axle link bearing according to one of Claims 1 to 9, **characterized**
**in that** the axle link shell (20) and the cover shell (21) are of thick-walled configuration, as semicircular half-shells in their external shape,
**in that** they bear against one another in a positively locking manner at bearing faces (23) via a mutually assigned bearing structure, preferably in each case via a longitudinal step (22), and
**in that** the clamping screws (38a, 38b) are guided approximately perpendicularly through the bearing faces (23), threaded holes preferably being made for this purpose on the bearing faces (23) of the axle link shell (20).

11. Axle link bearing according to one of Claims 1 to 10, **characterized in that** the at least one connecting claw (10a, 10b) comprises a claw pin (11a, 11b) which projects from the receiving socket (5) and at least one claw extension (12a, 12b) which adjoins the former, comprises holes (13a, 13b, 14a, 14b) for connecting screws and is angled away and/or rotated and/or bent with respect to the claw pin direction for adaptation purposes.

12. Axle link bearing according to Claim 11, **characterized in that** the claw extension (12a, 12b) is formed with approximately a rectangular cross section for full-surface bearing against the associated bearing point.

13. Axle link bearing according to Claim 11 or 12, **characterized in that** a U-shaped bearing inner part (7) is formed as U-limb by claw pins (11a, 11b) which lie opposite on the receiving socket (5) and associated claw extensions (12a, 12b), and two holes (13a, 13b, 14a, 14b) which are spaced apart and lie offset with respect to the receiving socket (5) are preferably made for connecting screws in each case in a claw extension (12a, 12b).

14. Axle link bearing according to Claim 13, **characterized in that** the U-shaped bearing inner part (7) is a constituent part of a central pivot bearing (2) of a triangular link (1), and the claw extensions (12a, 12b) are screwed to a cylindrical axle element (15) with an offset with respect to the receiving socket (5), preferably horizontally at the top or vertically at the side.

## Revendications

1. Palier pour guide d'essieu d'un véhicule automobile avec une articulation à rotule en métal et élastomère,
avec un oeil de réception (5) métallique, côté extrémité du guide comme premier élément de palier,
avec une partie interne de palier (7) oblongue comme second élément de palier qui est inséré dans l'oeil de réception (5) et qui dépasse avec au moins une griffe de raccordement (10a, 10b) de la zone de l'oeil de réception (5), la griffe de raccordement (10a, 10b) pouvant être reliée à un palier côté structure au moyen de vis, et
avec au moins un corps en élastomère (27) précontraint entre la partie interne de palier (7) et l'oeil de réception (5),
l'adaptation géométrique et le pontage entre la position de l'oeil de réception (5) et la position et la géométrie du palier (15) côté structure étant réalisés par une forme adaptée d'au moins une griffe de raccordement (10a, 10b), l'adaptation géométrique étant intégrée dans la griffe de raccordement (10a, 10b),
**caractérisé en ce que**
la partie interne de palier (7) est réalisée dans la zone de l'oeil de réception (5) à symétrie de révolution de manière convexe (25) et est guidée avec au moins une griffe de raccordement (10a, 10b) hors de l'oeil de réception (5),
le corps en élastomère (27) est réalisé en plusieurs parties et recouvre la zone convexe (25) de la partie interne de palier (7), et
l'oeil de réception (5) est divisé longitudinalement dans un plan axial de telle manière qu'une partie de coque de réception puisse être reliée comme coque de guide d'essieu (20) à peu près à angle droit à un guide d'essieu (3a, 3b) et l'autre partie de coque de réception puisse être reliée comme coque de recouvrement (21) amovible par le biais de vis de serrage (38a, 38b, 39a, 39b) à la coque de guide d'essieu (20) en appliquant la précontrainte dans le corps en élastomère (27).

2. Palier de guide d'essieu selon la revendication 1, **caractérisé en ce que** la zone convexe de la partie interne de palier (7) est formée par une forme cylindrique médiane (25) qui se rétrécit des deux côtés pour obtenir des formes cylindriques latérales (26a, 26b) et constitue une forme biconique (24), la forme biconique (24) étant entourée par le corps en élastomère (27) avec respectivement une partie des formes cylindriques (26a, 26b) latérales.

3. Palier de guide d'essieu selon la revendication 1 ou 2, **caractérisé en ce que** les parties de coque de réception (20, 21) présentent à l'état fermé à peu près un contour interne correspondant à une forme négative de la forme (24) de la partie interne de palier (7), un espace interstitiel de réception pour le corps en élastomère (27) précontraint, en plusieurs parties étant réalisé entre les parties de coque de réception (20, 21) et la partie interne de palier (7).

4. Palier de guide d'essieu selon la revendication 3, **caractérisé en ce que** les plusieurs parties du corps en élastomère forment assemblées sous forme de parties de coque de corps en métal-élastomère (27) un corps tridimensionnel entourant la zone convexe (24), adapté à la forme de la partie interne de palier (7) avec des parois à peu près de même épaisseur, et
ces parois se composent respectivement d'une couche en élastomère (34) vulcanisé entre des parties de coque en tôle (29, 30), l'épaisseur de paroi à l'état non précontraint étant supérieure à la largeur de fente de l'espace interstitiel de réception.

5. Palier de guide d'essieu selon la revendication 4, **caractérisé en ce qu'**un film en élastomère (31) est appliqué au moins partiellement sur les faces opposées à la couche en élastomère (34) des parties de coque en tôle (29, 30), notamment sur les parties de coque en tôle (29) à l'intérieur du palier.

6. Palier de guide d'essieu selon l'une quelconque des revendications 1 à 5, **caractérisé en ce que** le corps en élastomère (27) en plusieurs parties est divisé radialement et/ou axialement.

7. Palier de guide d'essieu selon la revendication 6, **caractérisé en ce qu'**un corps en élastomère (27) de préférence sous forme d'un corps en métal et en caoutchouc avec des parties de coque en tôle (29, 30) à l'intérieur et à l'extérieur du palier et une couche en élastomère (34) vulcanisé au milieu, est divisé dans l'ensemble axialement en deux parties de coque de corps en élastomère (28a, 28b) et une précontrainte essentiellement radiale est appliquée à l'état précontraint dans la couche en élastomère (34).

8. Palier de guide d'essieu selon la revendication 6, **caractérisé en ce qu'**un corps en élastomère (27) avec des parties de coque en tôle (29, 30) à l'intérieur et à l'extérieur du palier est divisé radialement en deux parties de coque de corps en élastomère (28a, 28b) et la couche en élastomère (34) de chaque partie de coque de corps en élastomère (28a, 28b) et la partie de coque en tôle (30) à l'extérieur du palier sont espacées l'une de l'autre à l'état non précontraint respectivement par une fente (35) médiane radiale, au moins la fente dans la couche en élastomère (34) étant fermée à l'état précontraint par l'application d'une précontrainte radiale et axiale.

9. Palier de guide d'essieu selon la revendication 6, **caractérisé en ce qu'**un corps en élastomère (27) avec des parties de coque en tôle (29, 30) à l'intérieur et à l'extérieur du palier est divisé dans l'ensemble axialement et radialement en quatre parties de coque de corps en élastomère (27a, 27b) qui sont essentiellement réunies avec leurs bords contigus à l'état monté et précontraint par l'application d'une précontrainte radiale et axiale.

10. Palier de guide d'essieu selon l'une quelconque des revendications 1 à 9, **caractérisé en ce que**
la coque de guide d'essieu (20) et la coque de recouvrement (21) sont réalisées à paroi épaisse dans la forme extérieure comme des demi-coques semi-circulaires,
**en ce qu'**elles reposent l'une sur l'autre par le biais d'une structure d'appui associée réciproquement, de préférence respectivement par le biais d'un gradin longitudinal (22), par coopération de forme sur des surfaces d'appui (23), et
**en ce que** les vis de serrage (38a, 38b) sont guidées à peu près perpendiculairement au travers des surfaces d'appui (23), des perçages filetés pouvant être introduits à cet effet de préférence sur les surfaces d'appui (23) de la coque de guide d'essieu (20).

11. Palier de guide d'essieu selon l'une quelconque des revendications 1 à 10, **caractérisé en ce que** la au moins une griffe de raccordement (10a, 10b) se compose d'un tourillon de griffe (11a, 11b) dépassant de l'oeil de réception (5) et d'au moins une rallonge de griffe (12a, 12b) raccordée à celui-ci et contenant des perçages (13a, 13b, 14a, 14b) pour des vis de raccordement, laquelle est coudée et/ou tordue et/ou cintrée par rapport au sens du tourillon de la griffe à des fins d'adaptation.

12. Palier de guide d'essieu selon la revendication 11, **caractérisé en ce que** la rallonge de griffe (12a, 12b) est réalisée avec à peu près une section rectangulaire pour un appui plan sur le palier associé.

13. Palier de guide d'essieu selon la revendication 11 ou 12, **caractérisé en ce que**, grâce au tourillon de griffe (11a, 11b) opposé à l'oeil de réception (5) et aux rallonges de griffe (12a, 12b) associées en tant que branches du U, une partie interne de palier (7) en forme de U est réalisée et deux perçages (13a, 13b, 14a, 14b) pour vis de raccordement, espacés et se trouvant décalés par rapport à l'oeil de réception (5) sont mis en place de préférence respectivement dans une rallonge de griffe (12a, 12b).

14. Palier de guide d'essieu selon la revendication 13, **caractérisé en ce que** la partie interne de palier (7) en forme de U fait partie d'une articulation à rotule centrale (2) d'un guide triangulaire (1) et les rallonges de griffe (12a, 12b) sont vissées de préférence en haut horizontalement ou latéralement verticalement en décalé par rapport à l'oeil de réception (5) sur un corps d'essieu (15) cylindrique.
